# EUROPEAN PATENT APPLICATION

(11) **EP 2 309 476 A1**
(43) Date of publication of application: **13.04.2011**
(21) Application number: 09275076.9
(22) Date of filing: 15.09.2009
(51) Int. Cl.: G09B 9/06

(54) **Maritime vehicle with onboard simulation system**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A maritime vehicle comprising means for achieving connectivity between the vehicle and a user interface together with means for simulating an operation of the vehicle and/or a mission to be undertaken by the vehicle is provided.

## Description

The present invention relates to the field of maritime vehicles, in particular, relating to the training of operators for such vehicles and the validation of missions to be undertaken by said vehicles.

Training of operators of maritime vehicles, for example of unmanned underwater vehicles (UUV), requires simulation of each type of operation to be carried out so that experience thereof can be gained. The computational power and complexity required to create and run such simulations is not insubstantial and such simulation is usually undertaken at a centralised training centre where the associated computing power can be provided.

Conventional maritime vehicles such as UUV are very expensive, not particularly portable, devices having a large footprint. In comparison, the computational hardware required to host the simulation is relatively small and inexpensive. The aforementioned centralised simulation, therefore, represents a feasible manner of delivering the training and simulation of operations such a vehicle.

However, limitations of such a training scheme are that no last minute practising can be undertaken unless the bulky simulation equipment is transported to a location proximate the operational site. It may not be convenient to effect this transportation. In such cases, an alternative manner of delivering training and simulation of operations to improve flexibility thereof is desirable.

According to a first aspect, the present invention provides a maritime vehicle comprising:
means for achieving connectivity between the vehicle and a user interface;
   and
means for simulating an operation of the vehicle and/or a mission to be undertaken by the vehicle.

By providing a means for simulating an operation or "mission" within the operational apparatus itself, a trial run of any particular mission can be undertaken at any location to which the apparatus is transported simply by connecting the apparatus to a user interface such as a standard lap top computer. This enables operator training to be undertaken at a remote location (in situ) rather than at a centralised training facility which, in turn, enables adaptable operations to be simulated and practised immediately prior to launch of the vehicle. In so doing, last minute changes to the operation can be assessed, accommodated and practised to thereby improve likelihood of success of said operation together with an improved likelihood of a safe return of the vehicle.

The user interface may be a standard personal computer. The vehicle may be an unmanned underwater vehicle (UUV); alternatively, the vehicle may be an unmanned surface vehicle.

The simulating means may comprise means for actuating a physical component of the vehicle.

According to a second aspect, the present invention provides a method of simulating an operation of a maritime vehicle comprising the steps of:
connecting a user interface to the vehicle;
generating a simulated stimulus;
responding to the stimulus;
assessing a deviation from an established state; and
returning to the generating step dependent on the deviation.

The method may comprise the steps of monitoring the operation by the user interface; receiving a response to a stimulus from the user interface; and returning the response to the generating step to enable an amended stimulus to be generated dependent on the response.

The simulated stimulus may be one of the group of geography, tides, currents, relative motion of the vehicle, actuation of a control surface of the vehicle and activation or reorientation of a sensor of the vehicle.

A plurality of operations may be simulated to thereby effect simulation of a complete mission. Parts of the mission may be accelerated and/or bypassed.

According to a third aspect, the present invention provides a software program for implementing the aforementioned method. A maritime vehicle having the software program loaded thereon is also provided.

The present invention is now described in more detail, with reference to the accompanying drawing, in which:

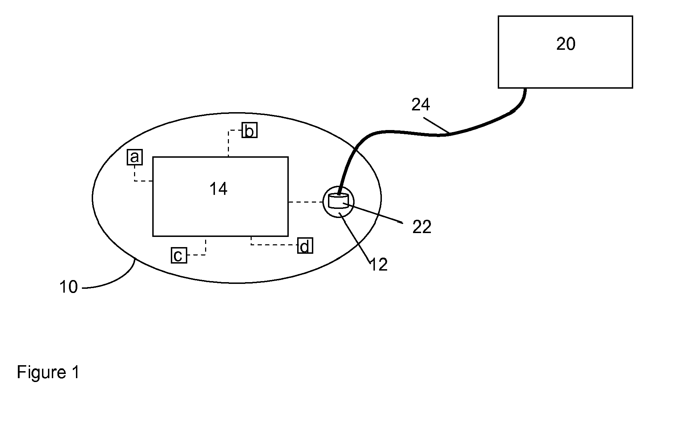

Figure 1 represents a schematic of a first embodiment of a vehicle comprising a simulator.

A maritime vehicle 10, in this embodiment an unmanned underwater vehicle (UUV), is provided in combination with a user interface 20. The vehicle 10 comprises a socket 12, connected to a processor 14 mounted within the vehicle 10. The socket 12 is configured to receive a plug 22, connected to a cable 24 of the user interface 20. Hence a two way communication path is established between a user accessing the user interface 20 and the processor 14 of the vehicle 10.

Alternatively, the maritime vehicle may be a vehicle designed to operate in a surface region of a body of water.

Any particular vehicle 10 has associated therewith a different set of sensors a, b, c, d. Such sensors a to d may, for example, include high resolution acoustic sensors, optical sensors and/or environmental sensors such as speed and pressure sensors. In a normal mode of operation of the vehicle 10, the processor 14 is configured to access and manipulate these sensors and to store data received from the sensors. In a simulation and/or training mode of operation of the vehicle 10, the simulation undertaken by the processor 14 is similarly configured to represent the functionality of the vehicle 10 and thereby simulate and represent the sensor capabilities of the normally operational vehicle 10 (i.e. a vehicle comprising sensors a to d).

In normal operation of a vehicle, the vehicle would experience external influences, detected by the sensors to which the vehicle makes a comparison, assesses any fluctuation or error and responds. Consequently, a physical feedback loop is achieved. In a simulation mode of the vehicle, virtual feedback loops are implemented within the software by including feedback modes within routines that are embedded within the software suite on the swimming vehicle rather than on a separate computer dedicated to running a simulation in a class room. The feedback modes within the software suite are activated if the operator chooses to select a "simulation mode" rather than an "operational mode" upon start up of the vehicle.

The "simulation mode" has two sub-modes, a "developer mode" and a "user mode". By activating the "simulation mode" followed by a preferred sub-mode upon start up, the vehicle 10 is able to be located on dry land whilst virtual feedback loops are provided to represent the responses of the vehicle 10 to any simulated external influences or stimuli.

In the "developer sub-mode" the detailed engineering of the vehicle 10 can be tested and assessed. Functionality of the hardware and software components of different aspects of the vehicle can be reviewed. For example, control surfaces of the vehicle 10 can be physically actuated and a simulated response of a motion of the vehicle resulting from this actuation can be effected and supplied to sensors and other equipment mounted on the vehicle 10 to represent behaviour and changes in attitude experienced by the vehicle. This type of simulation, allows the detailed engineering and particular configuration of the make up of the vehicle to be studied. In so doing, expected performance of the vehicle during a potential mission can be ascertained and optimal hardware components and programming configurations can be selected to enhance the performance and thus the potential for success of the mission.

In the "user sub-mode", physical actuation of hardware is bypassed completely and only simulation takes place. The user mode is used to train an operator of the vehicle 10 in circumstances where user intervention may be required. Alternatively, and more likely, the user mode is used to validate a particular mission plan or strategy in relation to particular external influences or stimuli that are likely to be experienced in the actual field of operation, thereby, enhancing the possibility of success of the mission. An operator can monitor the mission on the user interface as it progresses.

The vehicle 10 is virtually launched and initial conditions (a first set of stimuli) experienced by the vehicle are simulated by the software routines embedded within the vehicle. Upon detection of these stimuli, the vehicle 10 generates an automated response which, in turn is simulated. Variation from an initial state is evaluated and assessed. If the variation is considered to be excessive an amendment to the automated response may be generated and implemented. The virtual feedback loop is, hence, established and a mission is carried out. The operator may simply monitor the mission as it progresses or the operator may submit responses to the vehicle 10 through the user interface. In this way, potential modifications to the mission strategy can be assessed or training experiences can be gained.

Substantial parts of a real mission may be very routine and straight forward. It is, therefore, desirable, to accelerate or bypass certain parts of the simulated mission so that the more complex tasks can be focussed on in more detail. These complex tasks can be run in real time to fully assess and validate the mission plan without having to re-run the full duration of the mission for each simulation.

The technique of the present invention is particularly advantageous in the maritime environment as the operational environment is particularly "sensor challenged". Sensors experience difficulty in returning detailed accurate information. An underwater camera typically only gives a few metres of visibility. Sonar sensors are limited in the scope of information returned when compared to optics. High tidal flows, as experienced in littoral zones, can represent other difficulties, in particular, a high density medium. In particular, any delay in the mission can have significant consequences in the topology of the mission. At high tide, an entire harbour/estuary may remain navigable. However, if a delay is experienced, a few short hours of tidal flow can have significant impact on the landscape and parts of the operational field may become impassable. Last minute refinements may not only be made but also assessed when using the apparatus and technique of the present invention. Extra capability to a littoral UUV is, therefore, provided.

In summary, the technique of the present invention enables a complete and self-contained apparatus to be provided, independent of any additional training apparatus. The vehicle 10, with its full training and simulation capability can be transported in isolation and can be unpacked and training/validation runs can be initiated substantially immediately if desired.

Behaviours of the vehicle 10 can be predicted and evaluated to facilitate:-
o system development and functionality
o development of operational tactics and strategy
o assessment of vehicle performance.

At a more detailed level, the techniques of the present invention provides a means of introducing stimuli and resultant behaviours to be compared with predicted behaviours so that an optimisation can be undertaken to develop an improved strategy and operational performance for each and every mission to be carried out by the vehicle 10.

## Claims

1. A maritime vehicle comprising:
means for achieving connectivity between the vehicle and a user interface;
and
means for simulating an operation of the vehicle and/or a mission to be undertaken by the vehicle.

2. A vehicle according to Claim 1, wherein the user interface is a standard personal computer.

3. A vehicle according to Claim 1 or Claim 2, wherein the vehicle is an unmanned underwater vehicle.

4. A vehicle according to Claim 1 or Claim 2, wherein the vehicle is an unmanned surface vehicle.

5. A vehicle according to any preceding claim, wherein the simulating means comprises means for actuating a physical component of the vehicle.

6. A method of simulating an operation of a maritime vehicle comprising the steps of:
connecting a user interface to the vehicle;
generating a simulated stimulus;
responding to the stimulus;
assessing a deviation from an established state; and
returning to the generating step in dependence on an outcome of the assessing step.

7. A method according to Claim 6, comprising the steps of:
monitoring the operation by the user interface;
receiving a response to a stimulus from the user interface; and
returning the response to the generating step to enable an amended stimulus to be generated dependent on the response.

8. A method according to Claim 6 or Claim 7, wherein the simulated stimulus is one of the group of geography, tides, currents, relative motion of the vehicle, actuation of a control surface of the vehicle and activation or reorientation of a sensor of the vehicle.

9. A method according to any of Claims 6 to 8, wherein a plurality of operations are simulated to thereby effect simulation of a complete mission.

10. A method according to Claim 9, wherein the mission can be accelerated and/or parts of the mission are bypassed.

11. A software program for implementing the method of any of Claims 6 to 10.

12. A maritime vehicle comprising a software program according to Claim 11.
